# FASCICULE DE BREVET EUROPEEN

(11) **EP 2 009 335 B1**
(45) Date de publication et mention de la délivrance du brevet: **26.10.2011**
(21) Numéro de dépôt: 08011459.8
(22) Date de dépôt: 25.06.2008
(51) Int. Cl.: F16K 7/17, F16K 27/00

(54) **Bloc de distribution de fluides**
Verteilungsblock für Flüssigkeiten
Fluid distribution unit

(30) Priorité: 29.06.2007 FR 0756144
(43) Date de publication de la demande: 31.12.2008
(73) Titulaire: WITECK, 88470 Nompatelize (FR)
(72) Inventeur: Delaite, Jean-François, 88470 Nompatelize (FR); Delaite, Eric, 88420 Moyenmoutier (FR); Delaite, Arnaud, 88470 Nompatelize (FR)
(74) Mandataire: Poupon, Michel

(56) Documents cités:
- WO-A-92/20942
- US-A- 3 094 144
- US-A- 3 156 157
- US-A- 4 119 120
- US-A- 4 917 348

## Description

L'invention concerne un circuit de chauffage et/ou de climatisation comprenant un bloc de distribution de fluides.

Différents domaines sont concernés par le bloc de distribution de fluides notamment à chaque fois qu'un ensemble de vannes est nécessaire pour répartir un même fluide dans différentes conduites. La présente invention est proposée pour une application de répartition d'un fluide caloporteur dans une installation de chauffage domestique faisant appel à plusieurs sources énergétiques.

Dans le cas de circuits complexes comme décrit dans US 4, 119, 120 A1, lorsqu'un fluide doit être dirigé de différentes manières dans plusieurs circuits il est actuellement nécessaire de placer des raccords de tuyauteries entre les différents circuits, avec de multiples vannes sur chaque connexion entre les circuits. Ce type d'installation est donc complexe à installer, difficile à gérer et présente un encombrement notable, le coût de l'ensemble répartiteur de fluide, en raison du nombre de vannes, de la longueur des tubes et du temps d'installation, est donc élevé.

L'invention a pour objectif de résoudre ces principales difficultés en proposant un circuit de chauffage et/ou de climatisation comprenant un bloc de distribution simple et fiable permettant de supprimer les conduites et les vannes et permettant la répartition du fluide dans différentes conduites au moyen d'un automate de gestion de la distribution.

La présente invention concerne un circuit de chauffage et/ou de climatisation comprenant un bloc de distribution comme présenté dans la revendication 1.

Les avantages du circuit de chauffage et/ou de climatisation comprenant un bloc de distribution selon l'invention sont multiples :
- un bloc unique permet de remplacer avantageusement tout un ensemble de vannes et de tuyaux, ce qui représente donc une économie de coût et d'encombrement de l'installation,
- les obturateurs à membrane employés dans le bloc de distribution sont fiables et performants, nécessitent peu d'entretien et ne sont pas sensibles à la corrosion ce qui est important pour la durabilité de l'installation,
- la gestion de la distribution par un automate est plus précise et plus aisée que le contrôle d'un ensemble de vannes,
- le bloc de distribution peut être conformé pour distribuer de multiples circuits et notamment pour faire fonctionner une installation de chauffage avec de multiples sources énergétiques sans difficulté,
- si des obturateurs inserts sont employés le circuit de distribution peut être modifiable et donc configuré en fonction de différentes installations avec une pièce de base fabriquée en série, ou aussi permettre la modification d'une installation existante par addition ou retrait d'obturateurs,
- enfin les capteurs reliés à l'automate permettent une gestion précise de l'emploi des sources énergétiques les plus adaptées en fonction des températures requises et des conditions extérieures, ce qui conduit bien évidemment à un fonctionnement optimisé de l'ensemble et des économies énergétiques.

D'autres caractéristiques et avantages de l'invention se dégageront de la description qui va suivre en regard des dessins annexés qui ne sont donnés qu'à titre d'exemples non limitatifs.
La figure 1 est une vue en perspective du bloc de distribution.
La figure 2 est une vue éclatée d'une partie d'un bloc de distribution présentant les différents éléments essentiels de l'invention, un seul canal et un seul obturateur étant présents.
La figure 3 illustre un exemple d'utilisation du bloc de distribution pour un ensemble de chauffage domestique.
La figure 4 montre un bloc de distribution comportant 14 orifices et 11 obturateurs employé pour la répartition du fluide de l'ensemble de chauffage domestique représenté en figure 3.

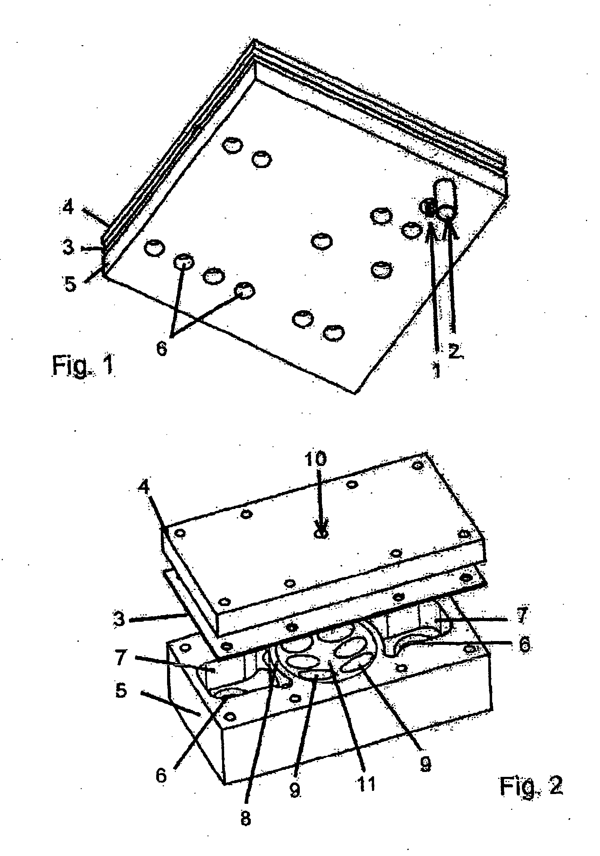

Comme cela est représenté sur la figure 1, un bloc de distribution selon l'invention comporte une entrée 1 et une sortie 2 pour au moins un fluide, dans un exemple avantageux de réalisation et décrit ci-après le fluide est de l'eau et le circuit extérieur au bloc de distribution raccordé entre l'entrée 1 et la sortie 2 est nommé circuit d'emploi, ce circuit étant dans l'exemple présent un circuit de chauffage et/ou de climatisation domestique interne à une habitation.

Le bloc de distribution est caractérisé par le fait qu'il présente une membrane souple 3 disposée entre un couvercle 4 et une base 5 percée d'orifices 6, lesdits orifices 6 étant reliés entre eux par des canaux conformés dans la base et mis en relation selon la disposition et la position ouverte ou fermée d'obturateurs positionnés dans lesdits canaux.

Le couvercle 4 et la membrane 3 sont plans et s'ajustent parfaitement avec la partie supérieure de la base 5 pour éviter toute fuite de fluide.

Selon l'invention au moins une entrée de fluide dans le distributeur correspond au fluide en retour d'une installation d'échange thermique, formant un circuit d'emploi fermé sur ledit bloc de distribution, soit donc dans l'exemple avantageux décrit le circuit de chauffage ou de refroidissement de l'habitation.

En effet, contrairement aux installations classiques qui fonctionnent avec une source énergétique unique, généralement une source de chaleur, le bloc de distribution permet l'emploi de sources différentes. Selon l'invention le bloc de distribution comporte outre le raccordement avec le circuit d'emploi au moins deux orifices 6 raccordés avec un circuit source fermé sur ledit bloc de distribution, ledit circuit source étant relié à une source énergétique générant ou absorbant de la chaleur ou à un dispositif de stockage énergétique.

Les orifices 6 sont réalisés traversants dans la base 5, ils débouchent dans les canaux. Les canaux ouverts sont positionnés sur la partie supérieure de la base 5 obturée par la membrane 3.

De manière avantageuse le bloc de distribution comporte des orifices raccordés à au moins deux circuits sources indépendants fermés sur ledit bloc de distribution et permettant au circuit d'emploi de fonctionner en relation avec au moins deux sources énergétiques différentes sélectionnées par le bloc de distribution.

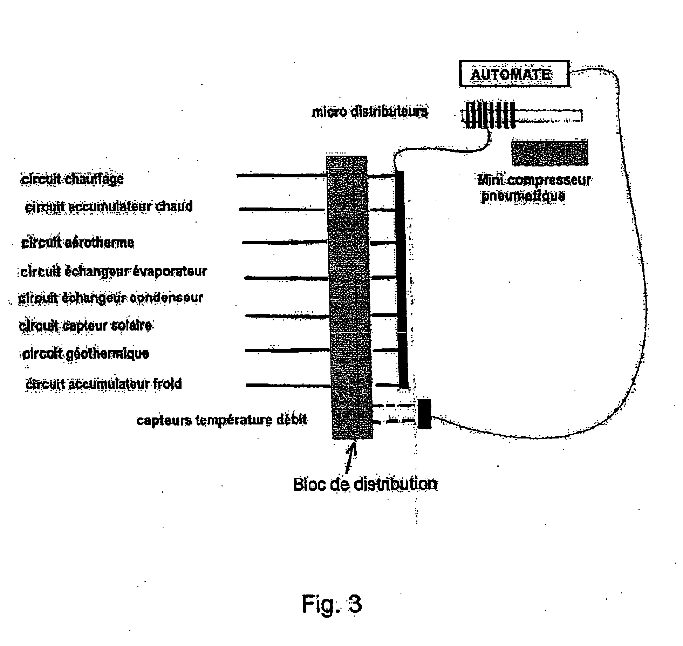

Tel qu'envisagé dans l'invention et tel que cela est représenté sur la figure 3 l'application de chauffage domestique peut fonctionner avec différentes sources énergétiques, il est par exemple possible de réaliser différents circuits raccordés et refermés sur le bloc de distribution, notamment un circuit aérotherme, un circuit échangeur évaporateur, un circuit échangeur condenseur, un circuit raccordé à un capteur solaire, un circuit géothermique, un circuit accumulateur de froid ou un circuit accumulateur de chaud.

Ces différents circuits permettant de réchauffer ou refroidir l'habitation et stoker des calories si nécessaire. Tous les circuits sont indépendants et reliés au circuit d'emploi interne à l'habitation par le bloc de distribution de manière à être utilisés en fonction des besoins du moment.

La gestion de l'ensemble étant réglée par un automate relié au bloc de distribution pour la répartition du fluide au travers des différents circuits, lequel automate effectue la régulation en fonction de mesures en provenance de capteurs de température, de pression et de débit placés dans le bloc de distribution ou/et sur les circuits.

A l'intérieur du bloc de distribution la base 5 est conformée avec un ensemble de canaux, lesquels canaux débouchent sur des orifices 6 reliés aux différents circuits précédemment décrits. Les canaux comportent des obturateurs permettant la circulation du fluide à l'intérieur du bloc de distribution selon une configuration déterminée par l'automate et programmée dans l'appareil.

Pour expliciter le fonctionnement d'un obturateur une partie d'un bloc de distribution est illustrée sur la figure 2.

Le bloc de distribution représenté comporte une membrane souple 3 disposée entre un couvercle 4 et une base 5 percée de deux orifices 6, lesdits orifices 6 étant reliés entre eux par des canaux 7 conformés dans la base et mis en relation selon la position ouverte ou fermée de l'obturateur 8 positionné entre les canaux 7.

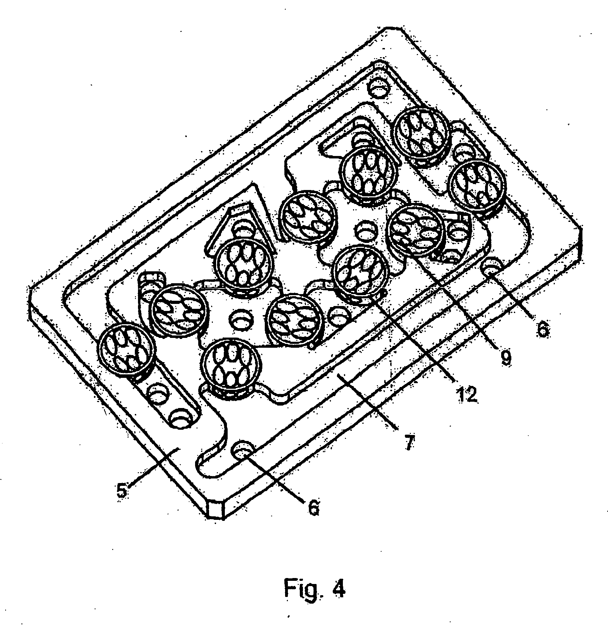

Selon l'invention et tel que cela est illustré sur les figures 2 et 4 les obturateurs sont de forme supérieure sensiblement concave formant une cavité 11 de circulation en dépression par rapport à la membrane 3 percée par au moins deux lumières 9, chacune des lumières 9 étant en relation avec une partie d'un canal 7, de telle manière que lorsque les parties supérieures des lumières sont obturées le fluide ne puisse plus circuler dans le canal.

Plus précisément les parties supérieures des lumières sont obturées au moyen du déplacement de la membrane 3 sus-jacente, laquelle membrane étant déplacée sous l'action d'une pression extérieure 10 de manière à épouser la forme de la cavité de circulation.

Sous l'action d'une pression hydraulique ou pneumatique appliquée sur la partie supérieure de la membrane 3 celle-ci se déforme et prend la forme de la cavité en dépression, empêchant la circulation du fluide au travers des lumières et au travers de la cavité de circulation.

Le bloc de distribution selon l'invention comporte une pluralité de circuits sources et donc plusieurs obturateurs pour distribuer le fluide et l'orienter vers le circuit d'emploi, selon l'invention chaque obturateur est réglable individuellement et contrôlé en ouverture ou en fermeture par un automate.

Il est à noter que dans chaque circuit le fluide peut circuler dans un sens ou dans un autre en fonction des pressions appliquées de chaque côté de l'obturateur, la commande de pression extérieure 10 fonctionnant comme interrupteur de passage.

La figure 3 illustre différents circuits sources envisageables reliés au circuit de chauffage à travers le bloc de distribution, gérés par l'automate et fonctionnant grâce aux informations recueillies par des capteurs de température et de débit.

Selon l'invention l'obturateur comporte au moins deux lumières, une de chaque côté du canal, avantageusement, et tel que cela est illustré sur la figure 2, chaque obturateur peut comporter six lumières 9 pour la mise en relation entre les deux parties du canal 7 et la cavité de circulation, trois de chaque côté du canal, chaque obturateur étant formé dans la structure même de la base 5 du bloc de distribution.

L'obturateur peut être conformé dans la structure même de la base ou rapporté après création de la base et des canaux, selon une variante importante de l'invention les obturateurs sont des inserts 12, de préférence amovibles de manière à permettre des modifications ultérieures de la circulation à l'intérieur du bloc de distribution.

Un tel bloc de distribution comportant des obturateurs en inserts est représenté sur la figure 4. Cette figure 4 montrant un distributeur comportant 14 orifices et 11 obturateurs permettant le raccordement des circuits décrits dans la figure 3.

Plusieurs variantes du bloc de distribution sont possibles, différentes configurations de canaux conformés dans la base peuvent être agencés, le nombre de circuits réalisables et raccordables au bloc de distribution peut être élevé et très variable en fonction des applications envisagées sans sortir du cadre de l'invention.

Un nombre variable d'obturateurs peuvent être agencés, comportant différentes configurations de lumières pour le passage du fluide, sans sortir du cadre de l'invention.

Le bloc de distribution est essentiellement prévu pour la circulation de l'eau dans une installation de chauffage domestique, rien n'interdit cependant d'utiliser un autre fluide, avec une membrane adaptée, pour d'autres applications notamment industrielles.

Le bloc de distribution fonctionne principalement avec un seul fluide acheminé dans différents circuits toutefois il peut être envisagé, sans sortir du cadre de l'invention, de faire passer par le bloc de distribution plusieurs fluides différents avec des circuits externes distincts.

Le bloc de distribution est réalisable dans différents matériaux, différents modes de fabrication de la base et des obturateurs sont réalisables, et l'ensemble du bloc de distribution peut être prévu hermétiquement scellé, ou de manière avantageuse démontable, sans sortir du cadre de l'invention.

Bien entendu, l'invention n'est pas limitée aux modes de réalisation décrits et représentés à titre d'exemples, mais elle comprend aussi tous les équivalents techniques ainsi que leurs combinaisons, comme décrit dans les revendications suivantes.

## Revendications

1. Circuit de chauffage et/ou de climatisation comprenant un bloc de distribution avec au moins une entrée (1) et une sortie (2) pour au moins un fluide, présentant une membrane souple (3) disposée entre un couvercle (4) et une base (5) percée d'orifices (6), lesquels orifices (6) étant reliés entre eux par des canaux (7) conformés dans la base (5) et mis en relation selon la position ouverte ou fermée d'obturateurs (8) positionnés dans lesdits canaux (7), lesquels orifices (6) étant raccordés extérieurement avec au moins un circuit **caractérisé en ce que** au moins une entrée (1) de fluide dans le bloc de distribution correspond au fluide en retour d'une installation d'échange thermique, formant un circuit d'emploi fermé sur ledit bloc de distribution, et **en ce que** le bloc de distribution comporte en outre au moins deux orifices (6) raccordés à un circuit source fermé sur ledit bloc de distribution, lequel circuit source étant relié à une source énergétique générant ou absorbant de la chaleur, ou à un dispositif de stockage énergétique.

2. Circuit selon la revendication 1 comportant des orifices (6) raccordés à au moins deux circuits sources indépendants fermés sur ledit bloc de distribution et permettant au circuit d'emploi de fonctionner en relation avec au moins deux sources énergétiques différentes sélectionnées par le bloc de distribution.

3. Circuit selon la revendication 2 dans lequel chaque obturateur (8) est de forme supérieure sensiblement concave pour former une cavité (11) de circulation pour le fluide en dépression par rapport à la membrane (3), laquelle cavité (11) étant percée par au moins deux lumières (9), chaque partie de canal (7) de chaque côté d'un obturateur (8) étant en relation avec la cavité (11) de circulation par l'intermédiaire d'au moins une lumière (9), de telle manière que lorsque les parties supérieures des lumières (9) situées dans la cavité (11) sont obturées le fluide ne puisse plus circuler dans le canal (7).

4. Circuit selon la revendication 3 dans lequel les parties supérieures des lumières (9) sont obturées au moyen du déplacement de la membrane (3) sus-jacente, laquelle membrane (3) étant déplacée sous l'action d'une pression (10) extérieure de manière à épouser la forme de la cavité (11) de circulation.

5. Circuit selon la revendication 4 dans lequel chaque obturateur (8) est réglable individuellement et contrôlé en ouverture ou en fermeture par un automate.

6. Circuit selon la revendication 5 dans lequel l'automate gère le bloc de distribution pour la répartition du fluide au travers des différents circuits en fonction de mesures en provenance de capteurs de température, de pression et de débit.

7. Circuit selon la revendication 6 dans lequel chaque obturateur (8) comporte six lumières (9) pour la mise en relation entre les deux parties du canal (7) et la cavité (11) de circulation, trois lumières étant disposées de chaque côté du canal (7), chaque obturateur (8) étant formé dans la structure même de la base (5) du bloc de distribution.

8. Circuit selon la revendication 6 dans lequel les obturateurs sont des inserts (12), de préférence amovibles, de manière à permettre des modifications ultérieures de la circulation du fluide à l'intérieur du bloc de distribution et différentes configurations de circuits.

## Claims

1. Circuit for heating and/or air conditioning comprising a distribution block with at least one inlet (1) and one outlet (2) for at least one fluid, having a flexible membrane (3) arranged between a cover (4) and base (5) which is pierced with openings (6), said openings (6) being connected together by matching channels (7) in the base (5) and linked according to the open or closed positions of shutters (8) positioned in said channels (7), said openings (6) being connected externally with at least one circuit, **characterised in that** at least one inlet (1) of fluid in the distribution block corresponds to the return fluid of a heat exchanger installation, forming a closed circuit of use on said distribution block, and **in that** the distribution block also comprises at least two openings (6) connected to a closed source circuit on said distribution block, said source circuit being connected to an energy source which generates or absorbs heat or to an energy storage device.

2. Circuit according to claim 1 comprising openings (6) connected to at least two independent closed source circuits on said distribution block and allowing the circuit of use to function in relation with at least two different energy sources selected by the distribution block.

3. Circuit according to claim 2 in which each shutter (8) is essentially concave in its upper shape to form a circulation cavity (11) for the fluid that is low in relation to the membrane (3), said cavity (11) being pierced by at least two openings (9), each part of the channel (7) of each side of a shutter (8) being in relation to the circulation cavity (11) by means of at least one opening (9), such that when the upper parts of the openings (9) situated in the cavity (11) are closed the fluid can no longer circulate in the channel (7).

4. Circuit according to claim 3, in which the upper parts of the openings (9) are closed by means of the displacement of the overlying membrane (3), said membrane (3) being displaced by the action of external pressure (10) so as to fit the shape of the circulation cavity (11).

5. Circuit according to claim 4 in which each shutter (8) can be controlled individually and controlled in opening or closing by an automaton.

6. Circuit according to claim 5 in which the automaton manages the distribution block for the distribution of fluid though different circuits as a function of measurements from temperature, pressure and flow rate sensors.

7. Circuit according to claim 6 in which each shutter (8) comprises six openings (9) for linking between the two parts of the channel (7) and the circulation cavity (11), three openings being arranged on either side of the channel (7), each shutter (8) being formed in the actual structure of the base (5) of the distribution block.

8. Circuit according to claim 6 in which the shutters are inserts (12), preferably removable ones, to permit subsequent modifications of the circulation of fluid inside the distribution block and different configurations of circuits.

## Patentansprüche

1. Heiz- und/oder Klimatisierungskreis, der einen Verteilerblock mit wenigstens einem Einlass (1) und einem Auslass (2) für wenigstens ein Fluid aufweist, der über eine elastische Membran (3) verfügt, die zwischen einer Abdeckung (4) und einem mit Öffnungen (6) versehenen Grundteil (5) angeordnet ist, wobei die Öffnungen (6) untereinander mit Kanälen (7) verbunden sind, die in dem Grundteil (5) eingeformt sind und entsprechend der geöffneten oder geschlossenen Stellung von in den Kanälen (7) angeordneten Verschlussteilen (8) verbunden werden, wobei die Öffnungen (6) außen an wenigstens einen Kreis angeschlossen sind, **dadurch gekennzeichnet, dass** wenigstens ein Fluideinlass (1) in den Verteilerblock dem aus einer Wärmeaustauschvorrichtung zurückkehrenden Fluid zugeordnet ist, wobei ein geschlossener Betriebskreis mit dem Verteilerblock gebildet ist, und dass der Verteilerblock weiterhin über wenigstens zwei Öffnungen (6) verfügt, die an einen geschlossenen Quellkreis unter Einschluss des Verteilerblocks angeschlossen sind, wobei der Quellkreis mit einer Wärme erzeugenden oder absorbierenden Energiequelle oder mit einer Energiespeichervorrichtung verbunden ist.

2. Kreis nach Anspruch 1, der Öffnungen (6) aufweist, die an wenigstens zwei unabhängige geschlossene Quellkreise unter Einschluss des Verteilerblocks angeschlossen sind, und der dem Betriebskreis erlaubt, in Verbindung mit wenigstens zwei unterschiedlichen Energiequellen zu arbeiten, die von dem Verteilerblock ausgewählt sind.

3. Kreis nach Anspruch 2, bei dem jedes Verschlussteil (8) eine im Wesentlichen konkav ausgebildete Oberfläche aufweist, um eine Zirkulationsvertiefung (11) für das Fluid zu bilden, die in Bezug auf die Membran (3) vertieft angeordnet ist, wobei die Vertiefung (11) mit wenigstens zwei Schlitzen (9) versehen ist und wobei jeder Teil des Kanals (7) auf jeder Seite eines Verschlussteils (8) mit der Zirkulationsvertiefung (11) über wenigstens einen Schlitz (9) verbunden ist, so dass, wenn die oberen Teile der in der Vertiefung (11) angeordneten Schlitze (9) verschlossen sind, das Fluid in dem Kanal (7) nicht mehr zirkulieren kann.

4. Kreis nach Anspruch 3, bei dem die oberen Teile der Schlitze (9) durch das Verschieben der darüber angeordneten Membran (3) verschlossen sind, wobei die Membran (3) durch die Wirkung eines äußeren Drucks (10) verschoben ist, um sich an die Gestalt der Zirkulationsvertiefung (11) anzupassen.

5. Kreis nach Anspruch 4, bei dem jedes Verschlussteil (8) einzeln einstellbar und beim Öffnen oder Schließen durch einen Automatismus steuerbar ist.

6. Kreis nach Anspruch 5, bei dem der Automat den Verteilerblock bei der Verteilung des Fluids über die verschiedenen Kreise in Abhängigkeit von den Messungen leitet, die von Temperatur-, Druck- und Durchflussfühlern eingehen.

7. Kreis nach Anspruch 6, bei dem jedes Verschlussteil (8) über sechs Schlitze (9) verfügt, um eine Verbindung zwischen den beiden Teilen des Kanals (7) und der Zirkulationsvertiefung (11) zu schaffen, wobei drei Schlitze auf jeder Seite des Kanals (7) angeordnet sind und jedes Verschlussteil (8) in der Struktur des Grundteils (5) des Verteilerblocks ausgebildet ist.

8. Kreis nach Anspruch 6, bei dem die Verschlussteile bevorzugterweise lösbare Einsätze (12) sind, um spätere Veränderungen der Zirkulation des Fluids im Inneren des Verteilerblocks und verschiedene Kreiskonfigurationen zu erlauben.
